# FASCICULE DE BREVET EUROPEEN

(11) **EP 1 556 453 B1**
(45) Date de publication et mention de la délivrance du brevet: **02.04.2014**
(21) Numéro de dépôt: 03782512.2
(22) Date de dépôt: 29.10.2003
(51) Int. Cl.: C09D 183/06, B29C 33/64, C08K 5/06

(54) **Produit de démoulage de pièces en matériau composite**
Entformungsmittel für Verbundstoffteile
Mould-release product for parts of composite material

(30) Priorité: 30.10.2002 FR 0213588
(43) Date de publication de la demande: 27.07.2005
(60) Demande divisionnaire: 08012578.4
(73) Titulaire: Airbus Helicopters, 13725 Marignane Cedex (FR)
(72) Inventeur: BOSCHET, Patrick, F-78180 Montigny Le Bretonneux (FR); PIEL, Emmanuel, 76620 Le Havre (FR)
(74) Mandataire: GPI & Associés
(86) Numéro de dépôt international: PCT/FR2003/003219
(87) Numéro de publication internationale: WO 2004/041947

(56) Documents cités:
- EP-A- 0 473 995
- EP-A- 0 476 925
- EP-A- 0 599 615
- EP-A- 1 215 254
- WO-A-00/77083
- WO-A-02/06030
- US-A- 5 650 453
- US-B1- 6 313 255

## Description

La présente invention concerne un produit de démoulage de pièces en matériau composite. Bien que non exclusivement, la présente invention s'applique particulièrement aux pales d'hélicoptère ou aux éléments de pales d'hélicoptère, qui sont fabriqués de façon usuelle par moulage d'un matériau composite.

On sait que, pour faciliter le démoulage de telles pales ou de tels éléments de pales après polymérisation, on applique préalablement un produit de démoulage sur toute la surface du moule.

Les produits de démoulage connus contiennent une grande proportion de solvant et présentent de ce fait de nombreux inconvénients, tels que l'importance des quantités devant être utilisées et le rejet de composés organiques volatils dans l'environnement.

L'invention est définie dans les revendications. Un de ses objets afin de remédier à ces inconvénients, concerne un produit liquide de démoulage anti-adhérent sans solvant, particulièrement efficace.

Citons le document US5650453 qui décrit des compositions pour revêtement polymérisables, destinées à enduire des rubans adhésifs. Le document WO0206030 décrit une couche de séparation permanente à consistance huileuse ou gommeuse.

Le document EP1215254 décrit une composition silicone liquide sans solvant durcissable par irradiation avec des rayonnements actiniques tels que les rayonnements UV, les rayons X ou les faisceaux d'électrons, afin de former un film de revêtement durcissable sur des matériaux substrats. Les compositions sont utiles pour recouvrir différents substrats qui ont pour fonction d'être ultérieurement enlevés (étiquettes, feuille papier, feuille plastique) mais ne vise pas un produit de démoulage. La composition d'organopolysiloxane durcissable par rayonnement comprend 100 parties en masse d'un composé aromatique (X-Z)nZ où X représente un groupe organopolysiloxanyle et 0,3 à 5 parties en poids d'un sel de diaryliodinium en tant qu'initiateur de photopolymérisation.

Selon l'invention, pour le démoulage d'une pièce en matériau composite, pour qu'un moule soit enduit, un produit de démoulage liquide et sans solvant, à polymériser par voie thermique, comporte :
- 100 parts pondérales d'un constituant de base consistant en un polydiméthylsiloxane époxyde,
- entre 5 et 7 parts pondérales d'un agent de polymérisation de ce constituant de base, constitué d'un sel de diaryliodonium,
- entre 5 et 10 parts pondérales d'un modulateur d'anti-adhérence, constitué d'un polydiméthylsiloxane époxydé, et
- agent anti-collage étant présent à hauteur de 8 à 12 parts pondérales d'un mono-vinyléther de dodécyle et de 8 à 12 parts pondérales d'un cyclohexane diméthanoldivinyléther. Cet agent anti-collage rend le produit moins gluant avant polymérisation.

Comme constituant de base et comme modulateur d'adhérence, on peut respectivement utiliser les produits fabriqués par la société RHODIA en portant respectivement les dénominations commerciales « UV POLY 200 » et « UV RCA 200». De même, l'agent de polymérisation à base de sel de diaryliodonium peut être celui fabriqué et vendu sous le nom commercial de « UV CATA 211 » par cette société RHODIA.

Ledit agent anti-collage (qui permet entre autre au produit de démoulage de pouvoir être étalé aisément sur les parois du moule et de réduire significativement l'aspect collant laissé par le polydiméthylsiloxane époxydé lorsqu'il n'est pas polymérisé) peut être constitué par un mélange d'un mono-vinyléther et d'ùn divinyléther.

Selon un mode de réalisation, le mono vinyléther est celui de dodécyle [formule CH₃-(CH₂)₁₁-O-CH=CH₂], tandis que le di-vinyléther est le 1.4 cyclohexane diméthanoldivinyléther [formule CH₂= CH-O-C₆H₁₀-O-CH=CH₂].

Selon une réalisation, ledit produit de démoulage comporte :
- entre 5 et 7 parts pondérales de l'agent de polymérisation,
- entre 5 et 10 parts pondérales du modulateur d'anti-adhérence, ce modulateur d'anti-adhérence étant un polydiméthylsiloxane époxydé, et
- l'agent anti-collage étant présent à hauteur de 8 à 12 parts pondérales d'un mono-vinyléther de dodécyle et de 8 à 12 parts pondérales d'un cyclohexane diméthanoldivinyléther.

Selon une réalisation, ce produit de démoulage comporte :
- 6 parts pondérales de l'agent de polymérisation,
- 8 parts pondérales du modulateur d'anti-adhérence, et
- l'agent anti-collage étant présent à hauteur de 11,4 parts pondérales d'un mono-vinyléther de dodécyle et de 11,4 parts pondérales d'un cyclohexane diméthanoldivinyléther.

Ainsi, grâce à l'invention, on obtient un produit de démoulage sans solvant qui présente de très bonnes propriétés d'anti-adhérence, notamment en raison de sa réalisation à base de silicone. Ce produit de démoulage présente également de bonnes performances en termes de tenue au collage ou de tenue à la peinture de la pièce composite réalisée par moulage. En effet, en raison des caractéristiques chimiques dudit produit qui est basé sur des siloxanes époxydés, le faible transfert qui peut avoir lieu au cours du moulage, n'a pas d'influence négative significative sur les propriétés de collage ou de tenue à la peinture de la pièce, contrairement à ce qui peut être observé avec des produits de démoulage à base de solvant.

On notera que, par rapport aux produits de démoulage usuels à base de solvant, le produit conforme à l'invention, obtenu à partir du mélange précité, présente également les avantages suivants :
- suppression du problème de rejets de composés organiques volatils,
- réduction de la quantité de produit consommé,
- réduction du temps d'application du produit,
- amélioration des caractéristiques de collage sur le matériau composite, et
- amélioration de l'aspect de surface.

Le produit de démoulage polymérise par voie thermique. Le cycle de polymérisation par voie thermique peut être de 1 heure à 150°C (+/- 5°).

Toutefois, selon les applications envisagées, ce cycle peut être optimisé, par exemple à 30 minutes à 100°C.

Le produit de démoulage de l'invention est liquide et il est appliqué sur la surface du moule, avec une épaisseur très faible (de l'ordre du micron généralement), de préférence de façon manuelle, à l'aide d'un chiffon ou au moyen de lingettes pré imprégnées par ledit produit.

Généralement, il n'est pas nécessaire d'appliquer ce produit sur le moule à chaque moulage. Le nombre d'opération de moulage possible avec un revêtement du produit conforme à la présente invention dépend du type de moulage mis en oeuvre, mais reste généralement équivalent à celui obtenu avec des démoulants usuels à base de solvant.

On notera que le produit de démoulage conforme à l'invention est efficace pour la polymérisation sur moules métalliques ou composites de toute pièce composite, utilisant des résines époxydes de classe inférieure ou égale à 180°C.

## Revendications

1. Produit liquide de démoulage, sans solvant, et qui polymérise par voie thermique ; ce produit étant destiné à enduire un moule pour une pièce en matériau composite, et comportant :
- 100 parts pondérales d'un constituant de base consistant en un polydiméthyisiloxane époxyde,
- entre 5 et 7 parts pondérales d'un agent de polymérisation dudit constituant de base, constitué d'un sel de diaryliodonium ;
- entre 5 et 10 parts pondérales d'un modulateur d'anti-adhérence, constitué d'un polydiméthylsiloxane époxydé; et
- un agent anti-collage rendant le produit moins gluant avant polymérisation, qui est constitué de 8 à 12 parts pondérales de mono-vinyléther de dodécyle et de 8 à 12 parts pondérales d'un cyclohexane diméthanoldivinyléther.

2. Produit selon la revendication 1, **caractérisé en ce qu'**il comporte :
- 6 parts pondérales dudit agent de polymérisation,
- 8 parts pondérales dudit modulateur d'anti-adhérence, et
- pour ledit agent anti-collage, 11,4 parts pondérales d'un mono-vinyléther de dodécyle et 11,4 parts pondérales d'un cyclohexane diméthanoldivinyléther.

3. Produit selon l'une des revendications 1 à 2, **caractérisé en ce qu'**il est à appliquer sur un moule de pales d'hélicoptère ou d'éléments de pales d'hélicoptère.

4. Lingette ou chiffon imprégné(e) d'un produit de démoulage présentant les caractéristiques selon l'une des revendications 1 à 2.

5. Procédé de moulage d'une pièce en matériau composite **caractérisé en ce que** l'on enduit un moule d'un produit de démoulage selon l'une des revendications 1 à 2 avec une épaisseur du produit de démoulage de l'ordre du micron, et **en ce que** l'on polymérise le produit de démoulage par voie thermique.

6. Procédé selon la revendication 5, **caractérisé en ce que** le cycle de polymérisation est de 1 heure à 150°C +/- 5°C.

7. Procédé selon la revendication 5, **caractérisé en ce que** le cycle de polymérisation est de 30 minutes à 100°C.

8. Procédé selon l'une des revendications 5 à 7, dans lequel la pièce en matériau composite est une pale d'hélicoptère ou un élément d'une telle pale.

9. Procédé selon l'une quelconque des revendications 5 à 8 **caractérisé en ce que** le moule est en matériau métallique ou composite.

## Patentansprüche

1. Flüssiges Entformungsmittel ohne Lösungsmittel, welches auf thermischem Wege polymerisiert, wobei das Mittel dazu bestimmt ist, eine Form für ein Teil aus Verbundwerkstoff zu überziehen, und aufweist:
- 100 Gewichtsteile eines Grundbestandteils bestehend aus einem Polydimethylsiloxanepoxid,
- zwischen 5 und 7 Gewichtsteile eines Polymerisierungsmittels des Grundbestandteils, bestehend aus einem Diaryliodoniumsalz,
- zwischen 5 bis 10 Gewichtsteile eines Antihaftmodulators bestehend aus einem Polydimethylsiloxanepoxid und
- ein Antihaftmittel, welches das Produkt vor einer Polymerisation weniger klebrig macht, das besteht das 8 bis 12 Gewichtsteilen Dodecylmonovinylether und aus 8 bis 12 Gewichtsteilen eines Cyclohexandimethanoldivinylether.

2. Mittel nach Anspruch 1, **dadurch gekennzeichnet, dass** es aufweist:
- 6 Gewichtsteile des Polymerisierungsmittels,
- 8 Gewichtsteile des Antihaftmodulators, und
- für das Antihaftmittel 11,4 Gewichtsteile eines Dodecylmonovinylethers und 11,4 Gewichtsteile eines Cyclohexandimethanoldivinylethers.

3. Mittel nach einem der Ansprüche 1 bis 2, **dadurch gekennzeichnet, dass** es anzuwenden ist bei einer Form für Hubschrauberrotorblätter oder für Elemente von Hubschrauberrotorblättern.

4. Feuchttuch oder Lappen imprägniert mit einem Entformungsmittel, welches die Merkmale gemäß einem der Ansprüche 1 bis 2 aufweist.

5. Formgussverfahren für ein Teil aus Verbundwerkstoff, **dadurch gekennzeichnet, dass** man eine Form mit einem Entformungsmittel nach einem der Ansprüche 1 bis 2 überzieht, wobei die Dicke des Entformungsmittels von der Größenordnung Mikrometer ist, und dadurch, dass das Entformungsmittel thermisch polymerisiert wird.

6. Verfahren nach Anspruch 5, **dadurch gekennzeichnet, dass** der Härtungsvorgang 1 Stunde dauert bei 150°C ± 5°C.

7. Verfahren nach Anspruch 5, **dadurch gekennzeichnet, dass** der Aushärtungsvorgang 30 Minuten dauert bei 100°C.

8. Verfahren nach einem der Ansprüche 5 bis 8, bei dem das Teil aus Verbundwerkstoff ein Hubschrauberrotorblatt oder ein Element eines solchen Rotorblatts ist.

9. Verfahren nach einem der Ansprüche 5 bis 8, **dadurch gekennzeichnet, dass** die Gussform aus Metall oder einem Verbundwerkstoff besteht.

## Claims

1. A liquid, solvent-free, heat-polymerising demoulding product; this product being intended to coat a mould for a part made of composite material, and comprising:
- 100 parts by weight of a base constituent consisting of an epoxy polydimethylsiloxane,
- between 5 and 7 parts by weight of a polymerisation agent for said base constituent, formed of a diaryliodonium salt,
- between 5 and 10 parts by weight of an anti-adhesion modulator, formed of an epoxy polydimethylsiloxane; and
- an anti-stick agent which makes the product less sticky before polymerisation, which is formed of 8 to 12 parts by weight of dodecyl monovinyl ether and 8 to 12 parts by weight of a cyclohexanedimethanol divinyl ether.

2. A product according to Claim 1, **characterised in that** it comprises:
- 6 parts by weight of said polymerisation agent,
- 8 parts by weight of said anti-adhesion modulator, and
- for said anti-stick agent, 11.4 parts by weight of a dodecyl monovinyl ether and 11.4 parts by weight of a cyclohexanedimethanol divinyl ether.

3. A product according to one of Claims 1 to 2, **characterised in that** it is to be applied to a mould for helicopter blades or for elements of helicopter blades.

4. A wipe or chiffon impregnated with a demoulding product having the characteristics according to one of Claims 1 to 2.

5. A method for moulding a part made of composite material, **characterised in that** a mould is coated with a demoulding product according to one of Claims I to 2 with a thickness of the demoulding product of the order of one micron, and **in that** the demoulding product is heat-polymerised.

6. A method according to Claim 5, **characterised in that** the polymerisation cycle is 1 hour at 150°C +/- 5°C.

7. A method according to Claim 5, **characterised in that** the polymerisation cycle is 30 minutes at 100°C.

8. A method according to one of Claims 5 to 7, in which the part made of composite material is a helicopter blade or an element of such a blade.

9. A method according to any one of Claims 5 to 8, **characterised in that** the mould is formed of metallic or composite material.
